(19) Europäisches Patentamt
European Patent Office
Office européen des brevets

(11) Veröffentlichungsnummer: **0 086 353**
**A1**

(12) # EUROPÄISCHE PATENTANMELDUNG

(21) Anmeldenummer: **83100584.8**

(22) Anmeldetag: **24.01.83**

(51) Int. Cl.³: **C 08 L 69/00**, C 08 K 3/24

(30) Priorität: **05.02.82 DE 3203905**

(43) Veröffentlichungstag der Anmeldung: **24.08.83 Patentblatt 83/34**

(84) Benannte Vertragsstaaten: **DE FR GB IT NL**

(71) Anmelder: **BAYER AG, Zentralbereich Patente, Marken und Lizenzen, D-5090 Leverkusen 1, Bayerwerk (DE)**

(72) Erfinder: **Cohnen, Wolfgang, Dr., Heymann Strasse 36, D-5090 Leverkusen (DE)**
Erfinder: **Kircher, Klaus, Dr., Alfred-Kubin-Strasse 3, D-5090 Leverkusen (DE)**
Erfinder: **Müller, Peter Rolf, Dr., Paul-Klee-Strasse 76, D-5090 Leverkusen (DE)**
Erfinder: **Krishnan, Sivaram, Dr., 159 Fairview Drive, New Martinsville West Virginia, 26155 (US)**
Erfinder: **Neuray, Dieter, Dr., 140 Fairview Drive, New Martinsville West Virginia, 25155 (US)**

(54) **Polycarbonat-Formmassen mit verbesserter Flammwidrigkeit.**

(57) Gegenstand der vorliegenden Erfindung sind Polycarbonatformmassen mit Zusätzen von Alkali- bzw. Erdalkalisalzen, Tetrahalogenphthalimiden und gegebenenfalls Glasfasern, dadurch gekennzeichnet, dass sie zusätzlich 0,1–7 Gew.-%, vorzugsweise 0,5–7 Gew.-% Brom enthalten.

EP 0 086 353 A1

BAYER AKTIENGESELLSCHAFT 5090 Leverkusen, Bayerwerk

Zentralbereich
Patente, Marken und Lizenzen PS/m-c

# Polycarbonat-Formmassen mit verbesserter Flammwidrigkeit

Gegenstand der vorliegenden Erfindung sind Polycarbonatformmassen bestehend aus

1. verzweigten, thermoplastischen aromatischen Polycarbonaten,

2. einem Alkali- oder Erdalkalisalz einer organischen oder anorganischen Säure in Mengen 0,01 bis 1 Gew.-%, bezogen auf Gewicht der Gesamtmasse,

3. Tetrahalogenphthalimiden der allgemeinen Formel I oder II

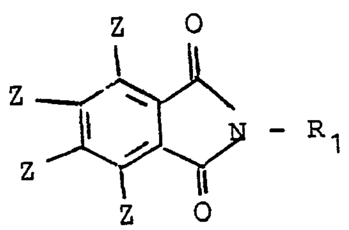

(I)

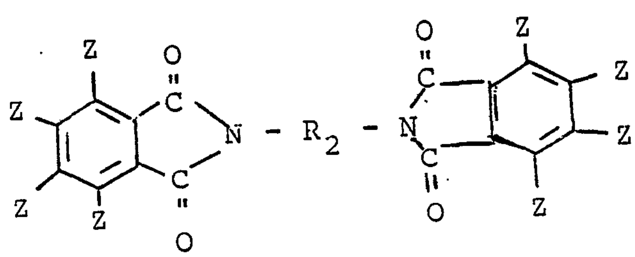

(II)

worin

$R_1$ = H, $C_1$-$C_4$-Alkyl, $C_6H_5$, $C_{10}H_7$, $C_6H_4X$, $C_6H_3X_2$ oder $C_6H_2X_3$ ist mit X = Chlor oder Brom und worin

$R_2$ eine Bindung, $C_2$-$C_8$-Alkylen, $C_6H_4$ oder p-Diphenylen ist und worin Z Cl oder Br ist,

in Mengen von 0,05 bis 5 Gew.-%, bezogen auf Gewicht der Gesamtmasse,

4. gegebenenfalls 1 bis 40 Gew.-% Glasfasern, bezogen auf Gewicht der Gesamtmasse,

dadurch gekennzeichnet, daß sie zusätzlich 0,1 bis 7 Gew.-%, vorzugsweise 0,5 bis 7 Gew.-% Brom enthalten, wobei dieser Bromgehalt entweder durch Einkondensation aromatisch gebundenes Brom enthaltender monomerer Verbindungen in das thermoplastische aromatische-Polycarbonat oder durch Zumischen von niedermolekularen Bromverbindungen zum thermoplastischen aromatischen Polycarbonat erzielt wird.

Als niedermolekulare Bromverbindungen sind geeignet niedermolekulare Polycarbonate (Polymerisationsgrad 3 - 10) auf Basis von Tetrabrombisphenol-A, Dekabromdiphenylether, Dekabromdiphenyl, Pentrabromphenoxyethan oder Tetrabromphthalsäure-di-(tribromphenylester).

In das aromatische Polycarbonat einkondensierbare, aromatisch gebundenes Brom enthaltende Verbindungen sind

beispielsweise Tetrabrombisphenol-A, Dibrombisphenol-A und p-Bromphenol. Diese Verbindungen werden in bekannter Weise in das Polycarbonat als Diphenole oder als Kettenabbrecher eingebaut.

Bekannt ist der Zusatz von Alkali- oder Erdalkalisalzen anorganischer oder organischer Säuren (siehe beispielsweise DE-OS 1 930 257 (Le A 12 278) oder DE-OS 2 149 311 (Le A 13 999)), gegebenenfalls in Kombination mit Halogenverbindungen und Glasfasern (siehe beispielsweise DE-OS 2 148 598 (Le A 13 970)).

Bekannt ist auch der Zusatz von halogenierten, niedermolekularen aromatischen Polycarbonaten und gegebenenfalls anorganischen oder organischen Antimonverbindungen zu thermoplastischen Harzen, beispielsweise thermoplastischen Polycarbonaten (siehe DE-OS 2 243 226).

Bekannt ist auch der Einsatz von halogenierten Phthalimiden mit besagten Alkalisalzen und gegebenenfalls Perfluorethylen (siehe DE-OS 2 7303 710 (Le A 17 759)).

Bekannt ist auch aus der Jap. Patent Publikation 75-64337 thermoplastische Harze, beispielsweise aromatische Polycarbonate, mit halogenierten Phthalimiden und gegebenenfalls anderen Flammschutzhilfsmitteln, wie $Sb_2O_3$, auszurüsten.

Bekannt ist auch aus der Jap. Patent Publikation 75119401 thermoplastische Harze, beispielsweise aromatische Polycarbonate, mit halogenierten Phthalimiden und gegebenenfalls anderen Flammschutzhilfsmitteln, wie $Sb_2O_3$, und gegebenenfalls weiteren Additiven wie beispielsweise Glasfasern auszurüsten.

Bekannt sind auch Polycarbonate mit einem Gehalt an organischen Alkalimetallsalzen und/oder Erdalkalimetallsalzen, die dadurch gekennzeichnet sind, daß sie ein anorganisches Alkali- oder Erdalkalimetallhalogenid und/oder ein organisches aromatisches oder heterocyclisches Halogenid enthalten. Gegebenenfalls können Siloxane, fluorierte Polyolefine oder Glasfasern zusätzlich zugesetzt werden. Tetrahalogenphthalimide sind als organische Halogenide jedoch nicht einbezogen (siehe DE-OS 2 744 016 zusammen mit US-PS 3 919 167).

Bekannt sind schließlich auch Mischungen aus Polycarbonaten, organischen Halogenverbindungen, Alkali- oder Erdalkalisalzen und Stoffe, die die Abtropfneigung von Polycarbonaten reduzieren (siehe DE-OS 2 918 882 und DE-OS 2 918 883).

Als organische Halogenverbindungen können sowohl halogenierte Phthalimide als auch die speziellen Bromverbindungen eingesetzt werden. Erwähnt wird jedoch nicht, daß die erfindungsgemäß einzusetzenden Kombinationen von Halogen enthaltenden Polycarbonaten bzw. Mischungen von Polycarbonaten mit halogenhaltigen Additiven, halogenierten Phthalimiden und Alkali- bzw. Erdalkalisalzen einer organischen Säure einen synergistischen Effekt bezüglich der Flammfestigkeit der Formmasse haben.

Weder die Kombination Salz, Phthalimid und gegebenenfalls Glasfasern, noch die Kombination Salz, spezielle Bromverbindungen und gegebenenfalls Glasfasern stabilisieren die thermaplastischen Polycarbonate so ausreichend, daß sie auch unter extremen Beflammungsbedingungen nicht zum Abtropfen neigen.

Bevorzugte Mengen an Salzen sind 0,01 bis 0,1 Gew.-%, bevorzugte Mengen an Phthalimiden sind 0,05 bis 2 Gew.-%, bevorzugte Mengen an Glasfasern sind 5 bis 25 Gew.-% und bevorzugte Mengen an Bromverbindungen sind 0,2 bis 20 Gew.-%, bezogen in allen Fällen jeweils auf das Gesamtgewicht der thermoplastischen Formmassen.

Geeignete verzweigte, halogenfreie, thermoplastische aromatische Polycarbonate im Sinne dieser Erfindung sind Homopolycarbonate und Copolycarbonate, denen z.B. ein oder mehrere der folgenden Diphenole

Hydrochinon,
Resorcin,
Dihydroxydiphenyle,
Bis-(hydroxyphenyl)-alkane,
Bis-(hydroxyphenyl)-cycloalkane,
Bis-(hydroxyphenyl)-sulfide,
Bis-(hydroxyphenyl)-ether,
Bis-(hydroxyphenyl)-ketone,
Bis-(hydroxyphenyl)-sulfoxide,
Bis-(hydroxyphenyl)-sulfone und
$\alpha,\alpha'$-Bis-(hydroxyphenyl)-diisopropylbenzole

zugrunde liegen, und die durch den Einbau von Mengen zwischen 0,05 und 2,0 Mol-% (bezogen auf eingesetzte Diphenole), an drei- oder mehr als dreifunktionellen Verbindungen, beispielsweise solchen mit drei oder mehr als drei phenolischen Hydroxygruppen verzweigt sind.

Polycarbonate dieser Art und deren Herstellung sind z.B. in den deutschen Offenlegungsschriften 1 570 533, 1 595 762, 2 116 974, 2 113 347, der britischen Patentschrift 1 079 821, der US-Patentschrift 3 544 514 und in der deutschen Offenlegungsschrift 2 500 092 beschrieben.

Einige der verwendbaren Verbindungen mit drei oder mehr als drei phenolischen Hydroxygruppen sind beispielsweise Phloroglucin, 4,6-Dimethyl-2.4.6-tri-(4-hydroxyphenyl)-hepten-2, 4.6-Dimethyl-2.4.6-tri-(4-hydroxyphenyl)-heptan, 1.3.5-Tri-(4-hydroxyphenyl)-benzol, 1.1.1-Tri-(4-hydroxyphenyl)-ethan, Tri-(4-hydroxyphenyl)-phenylmethan, 2.2-Bis-/4.4-bis-(4-hydroxyphenyl)-cyclohexyl/-propan, 2.4-Bis-(4-hydroxyphenyl-isopropyl)-phenol, 2.6-Bis-(2'-hydroxy-5'-methyl-benzyl)-4-methylphenol, 2-(4-Hydroxyphenyl)-2-(2.4-dihydroxyphenyl)-propan, Hexa-(4-(4-hydroxyphenyl-isopropyl)-phenyl)-ortho-terephthalsäureester, Tetra-(4-hydroxyphenyl)-methan, Tetra-(4-(4-hydroxyphenylisopropyl)-phenoxy)-methan und 1.4-Bis-((4'.4"-dihydroxytriphenyl)-methyl)-benzol. Einige der sonstigen dreifunktionellen Verbindungen sind 2.4-Dihydroxybenzoesäure, Trimesinsäure, Cyanurchlorid, 3.3-Bis-(4-hydroxyphenyl)-2-oxo-2.3-dihydroindol und 3.3-Bis-(4-hydroxy-3-methyl-phenyl)-2-oxo-2,3-dihydroindol.

Besonders bevorzugte Diphenole sind
2.2-Bis-(4-hydroxyphenyl)-propan,
2.2-Bis-(3.5-dimethyl-4-hydroxyphenyl)-propan und
1.1-Bis-(4-hydroxyphenyl)-cyclohexan.

Die aromatischen Polycarbonate sollen in der Regel mittlere Gewichtsmittel-Molekulargewichte $\bar{M}_w$ von 15 000 bis 200 000, vorzugsweise von 20 000 bis 80 000 haben, ermittelt durch Messungen der rel. Viskosität in $CH_2Cl_2$ bei 25°C und einer Konzentration von 0,5 g in 100 ml.

Zur Einstellung des Molekulargewichts $\bar{M}_w$ der Polycarbonate werden in bekannter Weise und bekannten Mengen Kettenabbrecher, wie beispielsweise Phenol oder Alkylphenole eingesetzt.

Geeignete Alkali- oder Erdalkalisalze einer organischen oder anorganischen Säure sind vorzugsweise die Natrium-, Kalium-, Lithium- und Calcium-Salze.

An organischen Säuren sind vorzugsweise die aliphatischen Sulfonsäuren, die aromatischen Sulfonsäuren, die aromatischen Carbonsäuren und die aliphatischen Carbonsäuren wie beispielsweise Trifluormethansulfonsäure, Perfluorbutansulfonsäure, Perfluoroctansulfonsäure, Dodecansulfonsäure, Benzolsulfonsäure, 2.4.6-Trichlorbenzolsulfonsäure, Benzoldisulfonsäure, Naphtholsulfonsäure, Naphtholdisulfonsäure, 2-Chlorbenzolsulfonsäure, Octansäure, Dodecansäure, Benzoesäure, Naphtholcarbonsäure und 2.4.6-Tribrombenzoesäure zu nennen.

An anorganischen Säuren sind vorzugsweise $H_3AlF_6$, $H_3BF_6$, $H_3SbF_6$, $H_2TiF_6$, $H_2SiF_6$, $H_3PO_4$, $H_2ZrF_6$, $H_2WF_6$ und $HBF_4$ genannt.

Geeignete Tetrahalogenphthalimide sind beispielsweise gemäß Formel I
Tetrachlorphthalimid,
N-Methyl-tetrachlorphthalimid,
N-Ethyl-tetrachlorphthalimid,
N-Propyl-tetrachlorphthalimid,
N-Isopropyl-tetrachlorphthalimid,
N-Butyl-tetrachlorphthalimid,
N-Isobutyl-tetrachlorphthalimid,
N-Phenyl-tetrachlorphthalimid,
N-(4-Chlorphenyl)-tetrachlorphthalimid,
N-(3,5-Dichlorphenyl)-tetrachlorphthalimid,
N-(2,4,6-Trichlorphenyl)-tetrachlorphthalimid,
N-Naphthyl-tetrachlorphthalimid,
Tetrabromphthalimid,
N-Methyl-tetrabromphthalimid,
N-Ethyl-tetrabromphthalimid,
N-Propyl-tetrabromphthalimid,
N-Isopropyl-tetrabromphthalimid,
N-Butyl-tetrabromphthalimid,
N-Isobutyl-tetrabromphthalimid,
N-Phenyl-tetrabromphthalimid,
N-(4-Chlorphenyl)-tetrabromphthalimid,
N-(3,5-Dichlorphenyl)-tetrabromphthalimid
N-(2,4,6-Trichlorphenyl)-tetrabromphthalimid
N-Naphthyl-tetrabromphthalimid.

Als geeignete Tetrahalogenphthalimide im Sinne der Erfindung gemäß Formel II sind beispielsweise genannt:

N,N'-Ethylen-di-tetrachlorphthalimid,
N,N'-Propylen-di-tetrachlorphthalimid,
N,N'-Butylen-di-tetrachlorphthalimid,
N,N'-p-Phenylen-di-tetrachlorphthalimid,
4,4'-Di-tetraphthalimido-diphenyl,
N-Tetrachlorphthalimido-tetrachlorphthalimid,
N,N'-Ethylen-di-tetrabromphthalimid,
N,N'-Propylen-di-tetrabromphthalimid,
N,N'-Butylen-di-tetrabromphthalimid,
N,N'-p-Phenylen-di-tetrabromphthalimid,
N,N'-Di-tetrabromphthalimido-diphenyl,
N-(Tetrabromphthalimido)-tetrabromphthalimid.

Besonders geeignet im Sinne der Erfindung sind:
N-Methyl-tetrachlorphthalimid,
N,N'-Ethylen-di-tetrachlorphthalimid.

Geeignete Glasfasern im Sinne der vorliegenden Erfindung sind alle im Handel erhältlichen Glasfasersorten und -typen, also geschnittene Glasseide (Langglasfasern und Kurzglasfaser), Rovings oder Stapelfasern, die noch durch geeignete Schlichten Polycarbonat-verträglich ausgerüstet sein können. Langglasfasern haben vor Einarbeitung in Polycarbonat eine bevorzugte Länge zwischen 6 mm und 3 mm, bei Kurzglasfasern soll die Länge zwischen 3 mm und 0,05 mm liegen. Der Durchmesser Ø des Einzelfadens soll zwischen 6 μm und 16 μm betragen.

Zwei Glasfasertypen werden besonders bevorzugt:

I. Langglasfaser mit einer mittleren Faserlänge von 6000 µm, einem Durchmesser von Ø 15 µm und einem Pulveranteil (50 µm) von ca. 1 Gew.-%, und

II. Gemahlene Kurzglasfaser mit einer mittleren Faserlänge von 230 µm, einem Durchmesser Ø von 13 µm und einem Pulveranteil (50 µm) von 5 Gew.-%.

Als Glasmaterial ist das alkalifreie Aluminium-Bor-Silikat-Glas ("E-Glas") oder auch das alkalihaltige "C-Glas" brauchbar.

Als geeignete Schlichten können die in der Literatur bekannten verwendet werden, besonders bewährt für Polycarbonatmassen ist die für Kurzglasfasern bekannte Wasserschlichte (vgl. DT-AS 1 201 991).

Weitere Einzelheiten über Glasfasern und deren Verwendung in Kunststoffen, insbesondere in Polycarbonaten sind aus "Harro Hagen, Glasfaserverstärkte Kunststoffe", Springer-Verlag, Berlin, Göttingen, Heidelberg, 1961 (insbesondere Seiten 182-252) und aus US-Patent 3 577 378 (Ue 2159-Cip) bekannt.

Die erfindungsgemäß einzusetzenden zusätzlichen Bromverbindungen sind literaturbekannt, sowohl die als Additive als auch die zur Einkondensation eingesetzten. Sie

werden in Mengen von 0,2 bis 30 Gew.-%, bezogen auf Gesamtgewicht der Polycarbonatformmasse, eingesetzt.

Die Herstellung der erfindungsgemäßen Formmassen kann beispielsweise erfolgen

1. durch simultanes oder sukzessives Mischen der Einzelkomponenten und gemeinsames Extrudieren;

2. durch Lösen des Polycarbonats in einem für den Thermoplasten geeigneten Lösungsmittel wie z.B. Methylenchlorid oder Chlorbenzol und anschließendes Ausdampfen der flüssigen Phasen und nachfolgender simultaner oder sukzessiver Zugabe der restlichen Komponenten während des Extrudierens;

3. durch Herstellung eines Konzentrates aus den Additiven mit einer Teilmenge des Polycarbonats und nachfolgender Vereinigung mit den restlichen Polycarbonat-Mengen;

4. durch Vermischen zweier Konzentrate wie z.B. be schrieben in der DT-OS 2 918 883 (Le A 19 569).

Die erfindungsgemäßen Formmassen können während oder nach ihrer Herstellung nach den üblichen thermoplastischen Verarbeitungsmethoden wie durch Extrusion zu Formteilen und Folien mit optimaler Flammwidrigkeit verarbeitet werden.

Die erfindungsgemäßen flammwidrigen Polycarbonatformmassen können außerdem andere Materialien wie antistatische Mittel, Pigmente, Formtrennmittel, thermische Stabilisatoren oder Ultraviolettlichtstabilisatoren zugemischt werden.

Der Einsatz der erfindungsgemäßen thermoplastischen Polycarbonatformmassen findet vor allem als Formteile auf dem Elektrosektor statt.

Die erfindungsgemäßen thermoplastischen Polycarbonatformmassen oder -folien zeichnen sich durch eine Kombination guter Eigenschaften aus, insbesondere durch die extreme Flammwidrigkeit. Neben der optimalen Flammwidrigkeit sind insbesondere die gute Verarbeitbarkeit, gute optische Eigenschaften betreffend Glanz und Transparenz, bei gleichzeitig vorhandenen Polycarbonat-spezifischen guten mechanischen Eigenschaften zu erwähnen.

Dies wird in den nachfolgenden Beispielen belegt.

0086353

Beispiele

Die den erfindungsgemäßen Polycarbonatformmassen der nachfolgenden Beispiele zugrunde liegenden aromatischen Polycarbonate sind folgende Homopolymere, die durch Reaktion von

(A) 95,5 Mol-% 2,2-Bis-(4-hydroxyphenyl)-propan
4,0 Mol-% Phenol als Kettenabbrecher
0,5 Mol-% Isatinbiskresol als Verzweiger
mit Phosgen

(B) 90,0 Mol-% 2,2-Bis-(4-hydroxyphenyl)-propan
5,5 Mol-% 2,2-Bis-(3,5-dibrom-4-hydroxyphenyl)-propan
4,0 Mol-% Phenol als Kettenabbrecher, 0,5 Mol% Isatinbiskresol als Verzweiger mit Phosgen

nach dem Zweiphasengrenzflächenverfahren mit Natriumhydroxid und Triethylamin unter Standardbedingungen hergestellt worden sind.

Die relative Lösungsviskosität dieser Polycarbonate betrug:
A = 1,35, B = 1,33 gemessen bei 25°C in einer 0,5 Gew.-%igen Lösung in Methylenchlorid.

Die erhaltenen Polymeren wurden bei 300°C extrudiert und zu Granulat zerkleinert. Diese Granulate wurden zur Herstellung der erfindungsgemäßen Polycarbonatformmassen

durch Zumischen der in den nachfolgenden Beispielen aufgeführten Additivkombinationen verwendet. Die nach diesem Extrusionslauf erhaltenen Granulate wurden im Spritzgußverfahren bei 300 - 320°C zu

(a.) Prüfplatten der Abmessungen
300 mm x 300 mm x 3 mm und zu

b.) Teststäben der Abmessungen
127 x 12,7 x 0,8 mm
127 x 12,7 x 1,6 mm
127 x 12,7 x 3,2 mm
ausgeformt.

Ferner wurde ein Teil der erhaltenen Granulate im Extrusionsverfahren zu Platten verarbeitet (c.).

I. Prüfung auf Abtropfneigung an Plattenware bei scharfer Beflammung

Die Prüfplatten (a.) wurden einer speziellen Brandprüfung unterzogen, die ein Erkennen von abtropfenden Teilen ermöglicht.

Gemäß diesem Testverfahren wurden die Platten auf einem Asbestrahmen aufgespannt und mit einer Propangasflamme aus einem Propan-Handbrenner der Firma Lorch, Typ 1001 (Durchflußmenge 120 l Propan pro Stunde, die Luftansaugöffnungen des Brenners sind vollkommen geöffnet) in einem Winkel von 45° von

einer unteren Ecke her beflammt, wobei der Abstand der Stahlhülse des Brenners zum Prüfteil 60 mm beträgt. Die Beflammung wird nach 3 Minuten beendet.

II. Brandprüfung gemäß Underwriters Laboratories, Inc., Bulletin 94

Die Teststäbe (b.) (10 Stück für jede aufgeführte Additivkombination) wurden dem Testverfahren gemäß Underwriters Laboratories, Inc., Bulletin 94, Verbrennungstest zur Klassifizierung von Materialien, unterworfen.

Gemäß diesem Testverfahren wurden die so geprüften Materialien entweder mit UL-94 V-0, UL-94 V-I und UL-94 V-II klassifiziert und zwar auf der Basis der mit den 10 Teststäben erhaltenen Ergebnissen. Die Kriterien für jede dieser V-Klassifizierungen gemäß UL-94 sind kurz wie folgt:

UL-94 V-0 Das durchschnittliche Flammen und/oder Glühen nach Entfernen der Zündflamme soll 5 Sekunden nicht überschreiten und keine der Proben soll Teilchen abtropfen, die absorbierende Baumwolle entzünden.

UL-94 V-I Das durchschnittliche Flammen oder Glühen nach Entfernen der Zündflamme soll 25 Sekunden nicht überschreiten und keine der Proben soll Teilchen abtropfen, die absorbierende Baumwolle entzünden.

UL-94 V-II Das durchschnittliche Flammen oder Glühen nach Entfernen der Zündflamme soll 25 Sekunden nicht überschreiten und die Proben tropfen brennender Teilchen Teilchen ab, die absorbierende Baumwolle entzünden.

III. Brandtest gemäß Federal Aviation Regulation - FAR 25.853.a.

Ein Teil (c.) der - wie weiter oben beschrieben - erhaltenen Granulate wurde im Extrusionsverfahren bei 290 - 310°C zu Platten von 1,5 mm und 3,0 mm Dicke verarbeitet. Aus diesen Platten wurden Prüfkörper folgender Abmessungen ausgeschnitten:

350 x 75 x 1,5 mm
350 x 75 x 3,0 mm

Diese Prüfplatten (je drei für jede Additivkombination) wurden auf ihr Brandverhalten nach den Richtlinien der FEDERAL AVIATION REGULATION - FAR 25.853.a. geprüft.

Gemäß diesem Testverfahren wurden die Prüfkörper hinsichtlich folgender Eigenschaften beurteilt:

1. Nachbrennzeiten der brennend abgefallenen Tropfen,
2. Nachbrennzeiten der brennenden Prüfkörper,
3. zerstörte Probenlängen.

Die Mittelwerte dürfen folgende Werte nicht überschreiten:

M 1 $\leq$ 3 sec
M 2 $\leq$ 15 sec
M 3 $\leq$ 152 mm (6 inches).

Wird einer der drei Mittelwerte überschritten, dann gilt die Prüfung als nicht bestanden.

Die Ergebnisse der Brandprüfungen sind in den nachfolgenden Tabellen zusammengestellt.

| Lfd. Nr. | Verwendeter Polycarbonat-Typ | Additivkombination | I. Prüfung auf Abtropfneigung an Plattenware bei scharfer Beflammung (a) | II. Brandverhalten nach UL-subject-94 (b.) |
|---|---|---|---|---|
| 1 | A | - | tropft brennend ab | 1,6 mm V 2<br>3,2 mm V 2 |
| 2 | A | 0,06 Gew.-%<br>Perfluorbutansulfonsaures Kalium<br>10,8 Gew.-%<br>Oligocarbonat aus 2,2-Bis-(3,5-dibrom-4-hydroxyphenyl)-propan | tropft brennend ab | 0,8 mm V 2<br>1,6 mm V 0<br>3,2 mm V 0 |
| 3 | A | 0,06 Gew.-%<br>Perfluorbutansulfonsaures Kalium<br>10,8 Gew.-%<br>Oligocarbonat aus 2,2-Bis-(3,5-dibrom-4-hydroxyphenyl)-propan<br>0,5 Gew.-%<br>N-Methyl-tetrachlor-phthalimid | kein Abtropfen | 0,8 mm V 0<br>1,6 mm V 0<br>3,2 mm V 0 |
| 4 | A | 0,06 Gew.-%<br>Perfluorbutansulfonsaures Kalium<br>9,0 Gew.-%<br>Bis-1,2-(tetrabromphthalimido)-ethan<br>0,50 Gew.-%<br>N-Methyltetrachlorphthalimid | kein Abtropfen | 0,8 mm V 0<br>1,6 mm V 0<br>3,2 mm V 0 |
| 5 | B | 0,06 Gew.-%<br>Perfluorbutansulfonsaures Kalium<br>0,5 Gew.-%<br>N-Methyltetrachlorphthalimid | kein Abtropfen | 0,8 mm V 0<br>1,6 mm V 0<br>3,2 mm V 0 |
| 6 | B | 15 Gew.-%<br>Glasfasern<br>(d = 10-15 μ; L = 200-250 μ)<br>0,06 Gew.-%<br>Perfluorbutansulfonsaures Kalium<br>0,05 Gew.-%<br>N-Methyltetrachlorphthalimid | kein Abtropfen | 0,8 mm V 0<br>1,6 mm V 0<br>3,2 mm V 0 |

| Lfd. Nr. | Verwendeter Polycarbonat-Typ | Additivkombination | III. Brandverhalten nach FAR 25.853.a. (c.) | II. Brandverhalten nach UL-subject-94 (b.) |
|---|---|---|---|---|
| 7 | A | 0,06 Gew.-% Perfluorbutansulfonsaures Kalium<br>1,0 Gew.-% Dekabromdiphenylether | d=1,5 mm M 1: 5 sec<br>M 2: 12 sec<br>M 3: 121 mm<br>nicht bestanden<br>d=3,0 mm M 1: 6 sec<br>M 2: 9 sec<br>M 3: 118 mm<br>nicht bestanden | 0,8 mm V 2<br>1,6 mm V 0<br>3,2 mm V 0 |
| 8 | A | 0,06 Gew.-% Perfluorbutansulfonsaures Kalium<br>1,0 Gew.-% N-Methyltetrachlorphthal | d=1,5 mm M 1: 6 sec<br>M 2: 11 sec<br>M 3: 111 mm<br>nicht bestanden<br>d=3,0 mm M 1: 8 sec<br>M 2: 10 sec<br>M 3: 108 mm<br>nicht bestanden | 0,8 mm V 2<br>1,6 mm V 0<br>3,2 mm V 0 |
| 9 | A | 0,06 Gew.-% Perfluorbutansulfonsaures Kalium<br>0,60 Gew.-% Dekabromdiphenylether<br>0,40 Gew.-% N-Methyltetrachlorphthalimid | d=1,5 mm M 1: 0 sec<br>M 2: 10 sec<br>M 3: 108 mm<br>bestanden<br>d=3,0 mm M 1: 0 sec<br>M 2: 8 sec<br>M 3: 110 mmm<br>bestanden | 0,8 mm V 0<br>1,6 mm V 0<br>3,2 mm V 0 |
| 10 | A | 0,06 Gew.-% Perfluorbutansulfonsaures Kalium<br>0,50 Gew.-% Dekabromdiphenylether<br>0,50 Gew.-% N-Methyltetrachlorphthalimid | d=1,5 mm M 1: 0 sec<br>M 2: 8 sec<br>M 3: 108 mm<br>bestanden<br>d=3,0 mm M 1: 0 sec<br>M 2: 6 sec<br>bestandenM 3: 107 mm | 0,8 mm V 0<br>1,6 mm V O<br>3,2 mm V 0 |

Patentansprüche:

1. Polycarbonatformmassen bestehend aus

1.1 verzweigten, thermoplastischen aromatischen Polycarbonaten,

1.2 einem Alkali- oder Erdalkalisalz einer organischen oder anorganischen Säure in Mengen von 0,01 bis 1 Gew.-%, bezogen auf Gewicht der Gesamtmasse,

1.3 Tetrahalogenphthalimiden der allgemeinen Formel I oder II

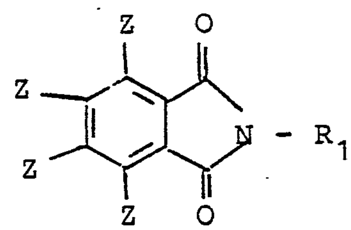

(I)

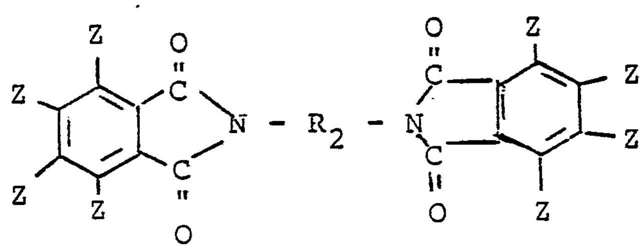

(II)

worin

$R_1$ = H, $C_1$-$C_4$-Alkyl, $C_6H_5$, $C_{10}H_7$, $C_6H_4X$, $C_6H_3X_2$ oder $C_6H_2X_3$ ist mit X = Chlor oder Brom und worin

$R_2$ eine Bindung, $C_2$-$C_8$-Alkylen, $C_6H_4$ oder p-Diphenylen ist und worin Z Cl oder Br ist,

in Mengen von 0,05 bis 5 Gew.-%, bezogen auf Gewicht der Gesamtmasse, und

1.4 gegebenenfalls 1 bis 40 Gew.-% Glasfasern, bezogen auf Gewicht der Gesamtmasse

dadurch gekennzeichnet, daß sie zusätzlich 0,1 - 7 Gew.-% Brom enthalten, wobei dieser Bromgehalt entweder durch Einkondensation aromatisch gebundenes Brom enthaltender monomerer Verbindungen in das thermoplastische aromatische Polycarbonat oder durch Zumischen von niedermolekularen Polycarbonat auf Basis von Tetrabrombisphenol-A, Dekabromdiphenylether, Dekabromdiphenyl, Pentabromphenoxyethan oder Tetrabromphthalsäure-di-(tribromphenylester) zum thermoplastischen aromatischen Polycarbonat erzielt wird, und wobei die Gewichtsmenge dieser einkondensierten bzw. zugesetzten Bromverbindungen zwischen 0,2 und 30 Gew.-%, bezogen auf Gesamtgewicht der Polycarbonatformmasse, beträgt.

2. Formmassen gemäß Anspruch 1, dadurch gekennzeichnet, daß die Gewichtsmenge dieser einkondensierten bzw. zugesetzten Bromverbindungen zwischen 0,5 und 20 Gew.-%, bezogen auf Gesamtgewicht der Polycarbonatformmasse, beträgt.

Europäisches Patentamt

# EUROPÄISCHER RECHERCHENBERICHT

0086353 Nummer der Anmeldung

EP 83 10 0584

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| D,A | DE-A-2 703 710 (BAYER AG) * Seite 11, Zeilen 9-18; Anspruch 1 * --- | 1 | C 08 L 69/00<br>C 08 K 3/24 |
| D,A | DE-A-2 918 882 (BAYER AG) * Anspruch 1; Seite 4, Zeile 1 - Seite 15, Zeile 24 * --- | 1,2 | |
| A | FR-A-2 377 436 (MOBAY CHEMICAL CORP.) * Seite 5, Zeile 12 - Seite 7, Zeile 18; Anspruch 3 * ----- | 1,2 | |
| | | | RECHERCHIERTE SACHGEBIETE (Int. Cl. 3) |
| | | | C 08 K 3/24<br>C 08 C 69/00 |

Der vorliegende Recherchenbericht wurde für alle Patentansprüche erstellt.

| Recherchenort | Abschlußdatum der Recherche | Prüfer |
|---|---|---|
| BERLIN | 22-04-1983 | IDEZ C.G. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03 82